# EUROPÄISCHE PATENTSCHRIFT

(11) **EP 3 080 036 B1**
(45) Veröffentlichungstag und Bekanntmachung des Hinweises auf die Patenterteilung: **30.08.2017**
(21) Anmeldenummer: 14789303.6
(22) Anmeldetag: 27.10.2014
(51) Int. Cl.: B67C 3/22

(54) **VERFAHREN SOWIE VORRICHTUNG ZUM AUFSCHÄUMEN EINES IN FLASCHEN EINGEBRACHTEN FLÜSSIGEN FÜLLGUTES**
METHOD AND DEVICE FOR FOAMING A LIQUID PRODUCT FILLED IN BOTTLES
PROCÉDÉ ET DISPOSITIF POUR FORMER DE MOUSSE D'UN PRODUIT LIQUIDE SOUTIRÉS EN BOUTEILLES

(30) Priorität: 12.12.2013 DE 102013113955
(43) Veröffentlichungstag der Anmeldung: 19.10.2016
(73) Patentinhaber: KHS GmbH, 44143 Dortmund (DE)
(72) Erfinder: MUSZINSKI, Olaf, 65779 Kelkheim (DE)
(86) Internationale Anmeldenummer: PCT/EP2014/073001
(87) Internationale Veröffentlichungsnummer: WO 2015/086214

(56) Entgegenhaltungen:
- EP-A1- 2 261 169
- DE-A1-102007 033 197
- DE-A1-102008 032 822
- DE-B4-102006 022 464
- DE-U1-202012 011 289

## Beschreibung

Die Erfindung bezieht sich auf ein Verfahren gemäß dem Oberbegriff des Patentanspruches 1 sowie auf eine Vorrichtung gemäß dem Oberbegriff des Patentanspruches 6.

In der Getränkeindustrie ist bekannt, Flaschen, Fässer oder dergleichen Behälter, die in einer Füllmaschine mit einem flüssigen Füllgut, beispielsweise mit Bier gefüllt wurden, vor dem Verschließen mit einem unter Druck stehenden flüssigen Behandlungsmedium zu beaufschlagen. Angestrebt ist ein Aufschäumen des Füllgutes in dem jeweiligen Behälter, um hierdurch über dem Füllgutspiegel im Behälter vorhandene Luft bzw. vorhandenen Luftsauerstoff zu verdrängen und die Beeinträchtigung des Füllgutes bzw. dessen Haltbarkeit und Geschmack durch Sauerstoff zu vermeiden. Als flüssiges Behandlungsmedium wird dabei eine wässrige Lösung oder Wasser verwendet, und zwar beispielsweise jeweils im erhitzten Zustand.

Zum Einbringen des flüssigen Behandlungsmedium ist zumindest eine Einspritzdüse vorgesehen, der das flüssige Behandlungsmedium unter Druck zugeführt wird und unter der die mit dem Füllgut gefüllten Behälter auf einer Transportstrecke zwischen einer Füllmaschine und einer auf diese Füllmaschine in der Produktionslinie folgenden Verschließmaschine hindurchgeführt werden. Das Einbringen bzw. Einspritzen der flüssigen Behandlungsmedium sollte auch unter Berücksichtigung produktspezifischer Parameter sowie auch in Abhängigkeit von der Leistung der Produktionslinie, d.h. in Abhängigkeit von der Anzahl der je Zeiteinheit mit dem flüssigen Behandlungsmedium behandelten Behälter so erfolgen, dass einerseits ein ausreichend starkes Aufschäumen erreicht wird, andererseits aber ein Überschäumen vermieden ist. Weiterhin ist es erforderlich, das Einbringen des Aufschäummediums keimfrei durchzuführen. Eine entsprechendes Verfahren und eine zugehörige Vorrichtung zum gesteuerten Aufschäumen eines in Flaschen oder dergleichen Behälter eingebrachten Füllgutes ist beispielsweise der DE 10 2006 022 464 B4 zu entnehmen. Ein Verfahren gemäß dem Oberbegriff des Anspruchs 1 sowie eine Vorrichtung gemäß dem Oberbegriff des Anspruchs 6 sind zudem aus der DE 10 2008 032 822 A1 bekannt.

Zur mikrobiologischen Stabilisierung des eingebrachten Füllgutes und Erhöhung des Aufschäumeffektes wird bei bekannten Verfahren und Vorrichtungen zum Aufschäumen eines in Flaschen oder dergleichen Behälter eingebrachten Füllgutes das flüssige Behandlungsmedium stark erhitzt, vorzugsweise auf eine Temperatur von ca. 90°C. Nachteilig ist eine derartig hohe Erhitzung des flüssigen Behandlungsmediums insbesondere, da diese sehr energieintensiv ist. Weiterhin besteht die Gefahr, dass sich das Bedienungspersonal durch derart hohe Temperaturen beeinträchtigt oder sogar geschädigt wird.

Aufgabe der Erfindung ist es, ein Verfahren und eine zugehörige Vorrichtung aufzuzeigen, mit dem ein in energetischer Hinsicht verbessertes Aufschäumen eines in Behälter, insbesondere Flaschen abgefüllten Füllgutes, insbesondere Bieres zu ermöglichen.

Zur Lösung dieser Aufgabe ist ein Verfahren entsprechend dem Patentanspruch 1 ausgebildet. Eine Vorrichtung zum Durchführen des Verfahrens ist Gegenstand des Patentanspruchs 6.

Nach einer der Erfindung zugrunde liegenden Erkenntnis kann dem flüssigen Behandlungsmedium als Desinfektionsmittel ein geringer Anteil an Chlordioxid zugesetzt werden, um eine mikrobiologischen Stabilisierung des in den Behälter, insbesondere Flasche eingebrachten Füllgutes zu erreichen. Die Erfinder haben erkannt, dass Chlordioxid in geringen Mengen keinen merklichen Einfluss auf die Qualität des Füllgutes, insbesondere Bierqualität hat. Besonders vorteilhaft kann abhängig von der Beschaffenheit des Bieres hierdurch eine Erhitzung des flüssigen Behandlungsmediums vollständig entfallen oder ist eine Erhitzung auf eine deutlich niedrige Temperatur ausreichend, d.h. die Erhitzung des flüssigen Behandlungsmediums zur mikrobiologischen Stabilisierung kann entfallen.

Der wesentliche Aspekt des erfindungsgemäßen Verfahrens zum Aufschäumen eines in Behälter, vorzugsweise Flaschen eingebrachten Füllgutes, insbesondere Bier ist somit darin zu sehen, dass in den Behälter als flüssiges Behandlungsmedium eine wässrige Lösung mit einem Anteil Chlordioxid oder Wasser mit einem Anteil Chlordioxid zugeführt wird. Besonders vorteilhaft kann durch die Beaufschlagung des in die Flasche abgefüllten Füllgutes, insbesondere Bier mit einem flüssigen Behandlungsmedium, vorzugsweise Wasser oder einer wässrigen Lösung mit einem geringen Anteil Chlordioxid effektiv das Entstehen von Mikroorganismen entgegengewirkt werden, so dass auf eine Erhitzung des flüssigen Behandlungsmediums in dem aus dem Stand der Technik bekannten Umfang verzichtet werden kann. Abhängig von der Zusammensetzung des abgefüllten Bieres kann sogar vollständig auf eine Erhitzung des flüssigen Behandlungsmediums verzichtet werden, d.h. die Verwendung eines Raumtemperatur aufweisendes flüssigen Behandlungsmedium kann bereits ausreichend sein. Hierdurch ergibt sich ein energetisch deutlich verbessertes Verfahren zum Aufschäumen eines flüssigen Füllgutes, insbesondere Bier.

Gemäß einer vorteilhaften Ausgestaltung des erfindungsgemäßen Verfahrens wird ein flüssiges Behandlungsmedium mit einem Anteil an Chlordioxid kleiner als 0,8 ppm dem im Behälter aufgenommenen flüssigen Füllgut zugeführt. Vorteilhaft wird pro Behälter als vorgegebene Menge des flüssigen Behandlungsmediums eine Menge kleiner als 0,05 ml, vorzugsweise kleiner als 0,02 ml des flüssigen Behandlungsmediums zugeführt. Bei einer derartig geringen Dosierung des Chlordioxidanteils im flüssigen Behandlungsmedium entsteht kein merklicher Einfluss auf die Qualität des Füllgutes, insbesondere Bierqualität. Es versteht sich von selbst, dass bei der Bestimmung der für das Aufschäumen benötigten Menge flüssigen Behandlungsmediums Erfordernisse durch die Behältergröße, die Temperatur des Getränks (z.B. Bier) sowie dessen Aufschäumverhalten berücksichtigt werden müssen.

Weiterhin vorteilhaft wird das flüssige Behandlungsmedium mit einer Temperatur kleiner 70 °C, vorzugsweise mit einer Temperatur im Bereich zwischen 60 °C und 70 °C in die Behälter eingebracht wird. Dadurch ist ein aus energetischer Sicht günstigerer Prozessablauf realisierbar.

Alternativ wird zum Aufschäumen von Bier mit einem Ethanol-Gehalt über 4% des gesamten Biervolumens das flüssige Behandlungsmedium im kalten Zustand, vorzugsweise mit Raumtemperatur in die Behälter eingebracht. Hier kann vollständig auf eine Erwärmung bzw. Erhitzung des flüssigen Behandlungsmediums verzichtet werden.

Ebenfalls ist Gegenstand der Erfindung eine Vorrichtung zur Durchführung des vorgenannten Verfahrens zum Aufschäumen eines in Behälter, vorzugsweise Flaschen eingebrachten Füllgutes, insbesondere Bier umfassend wenigstens eine Einspritzvorrichtung, eine Steuereinrichtung und zumindest einen vorzugsweise heizbaren Aufnahmebehälter mit einem darin aufgenommenen flüssigen Behandlungsmedium, wobei gesteuert durch die Steuereinrichtung vom Aufnahmebehälter jeweils eine vorgegebene Menge des flüssigen Behandlungsmedium entnommen und unter Druck dem im Behälter aufgenommenen Getränk, beispielsweise Bier, zugeführt wird. Erfindungsgemäß ist als flüssiges Behandlungsmedium eine wässrige Lösung mit einem Anteil Chlordioxid oder Wasser mit einem Anteil Chlordioxid vorgesehen. Vorteilhaft entfällt das Vorsehen einer Heizeinrichtung zur Erhitzung des flüssigen Behandlungsmediums vollständig oder eine Heizeinrichtung mit im Vergleich zum Stand der Technik reduziertem Energieverbrauch ist ausreichend.

Weiterhin vorteilhaft ist der Anteil an Chlordioxid kleiner als 0,8 ppm ist und die vorgegebene, in den Behälter eingespritzte Menge des flüssigen Behandlungsmediums ist kleiner als 0,05 ml, vorzugsweise kleiner als 0,02 ml. Bei der genannten Dosierung des Chlordioxidanteils im flüssigen Behandlungsmedium und der zugeführten Gesamtmenge an Behandlungsmedium ist keine Beeinträchtigung der Bierqualität feststellbar.

Ebenfalls vorteilhaft weist das flüssige Behandlungsmedium eine Temperatur kleiner 70 °C, vorzugsweise zwischen 60 °C und 70 °C auf. Alternativ weist zum Aufschäumen von Bier mit einem Ethanol-Gehalt von über 4% das flüssige Behandlungsmedium einen kalten Zustand, vorzugsweise Raumtemperatur auf.

Gemäß einer Weiterbildung der Vorrichtung kann eine Portioniereinrichtung zur durch die Steuereinrichtung gesteuerten Entnahme der vorgegebenen Menge des flüssigen Behandlungsmediums aus dem Aufnahmebehälter vorgesehen sein.

Gemäß einer weiteren Weiterbildung der Vorrichtung kann eine Druckregelung zur durch die Steuereinrichtung gesteuerten Entnahme der vorgegebenen Menge des flüssigen Behandlungsmediums aus dem Aufnahmebehälter vorgesehen sein.

Für eine weitere Weiterbildung der Vorrichtung ist vorgesehen, dass sowohl Portioniereinrichtung als auch Druckregelung vorgesehen sind.

Weiterhin vorteilhaft kann dem Aufnahmebehälter eine Heizeinrichtung zum Erhitzen des darin aufgenommenen flüssigen Behandlungsmediums zugeordnet sein.

Weiterbildungen der Erfindung sind Gegenstand der Unteransprüche. Die Erfindung wird im Folgenden anhand einer Figur, die in vereinfachter schematischer Darstellung eine Vorrichtung zur Durchführung des erfindungsgemäßen Verfahrens zum Aufschäumen eines flüssigen Füllgutes, insbesondere Bier zeigt, näher erläutert.

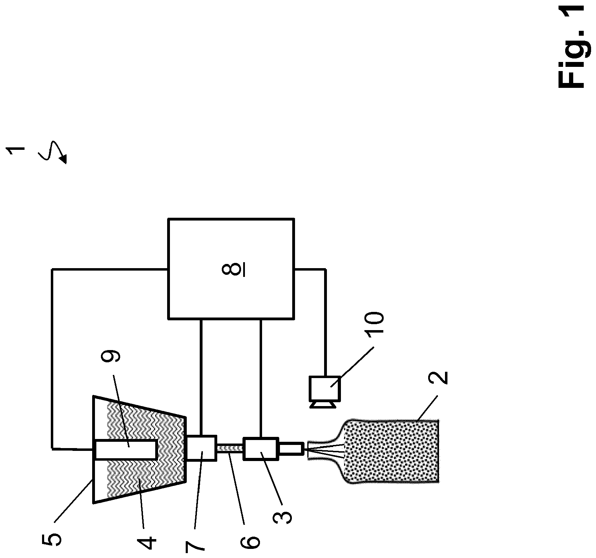

Die in der Figur allgemein mit 1 bezeichnete und schematisch dargestellte Vorrichtung ist beispielsweise Bestandteil einer Produktionslinie zum Füllen von Behältern, vorzugsweise Flaschen 2 mit einem flüssigen Füllgut, vorzugsweise Bier. Ebenfalls kann Teil der Produktionslinie eine nicht in der Figur dargestellte Vorrichtung zum Verschließen der gefüllten Flaschen 2 im Anschluss an das Auffüllen mit Bier sein.

Das in die Flaschen 2 abgefüllte Bier wird nach dem Einbringen in die Flasche 2 durch einen gesteuerten Energieeintrag derart aufgeschäumt, dass durch den sich bildenden Schaum Luft und insbesondere Luftsauerstoff oberhalb des Füllgutspiegels aus der Flasche 2 verdrängt wird, vorzugsweise derart, dass es dabei nicht zu einem Überschäumen kommt. Der Energieeintrag erfolgt gesteuert durch wenigstens eine Einspritzeinrichtung 3, vorzugsweise eine Einspritzdüse, die oberhalb der Bewegungsbahn der vorzugsweise aufrecht stehenden Flasche 2 zwischen einer nicht dargestellten Füllmaschine und einer ebenfalls nicht dargestellten Verschließmaschine vorgesehen ist.

Für das Aufschäumen wird in jede sich unter der Einspritzeinrichtung 3 vorbeibewegenden Flasche 2 eine vorgegebene Menge an einem flüssigen, das Aufschäumen bewirkenden ggf. erwärmten Behandlungsmedium 4 mit einem bestimmten Druck eingebracht. Das flüssige Behandlungsmedium 4 ist hierzu beispielhaft in einem vorzugsweise beheizbaren Aufnahmebehälter 5 aufgenommen, der über eine Zuführungsleitung 6 mit einer Portioniereinrichtung 7 und/oder Druckregelung an die Einspritzeinrichtung 3 angeschlossen ist. Sowohl die Einspritzeinrichtung 3 als auch die Portioniereinrichtung 7 sind im vorliegenden Ausführungsbeispiel mit einer Steuereinrichtung 8 verbunden, die zur gesteuerten Zuführung des flüssigen Behandlungsmediums 4 unter Druck und in der jeweils vorgegebenen Menge in die mit Bier gefüllte Flasche 2 eingerichtet ist. Die vorgegebene Menge ist über die Steuereinrichtung 8 durch entsprechende Ansteuerung der Portioniereinrichtung 7 steuerbar.

Der jeweilige durch das Einspritzen der vorgegebenen Menge des flüssigen Behandlungsmediums 4 erzeugte Energieeintrag entspricht im Wesentlichen derjenigen kinetischen Energie, die sich aus der vorgegebenen Menge und dem Einspritzdruck des eingebrachten Behandlungsmediums 4 sowie aus der Wärmeenergie, d.h. aus der Temperatur des Behandlungsmediums 4 ergibt. Um auch bei unterschiedlicher Leistung der Produktionsanlage, d.h. bei unterschiedlicher Anzahl der je Zeiteinheit gefüllten und verschlossenen Flaschen 2 bzw. bei unterschiedlicher Anzahl der je Zeiteinheit die Einspritzeinrichtung 3 passierenden Flaschen 2 den Energieeintrag in jede Flasche 2 möglichst konstant zu halten, wird mittels der Steuereinrichtung 8 bei konstanter oder im Wesentlichen konstanter Temperatur des flüssigen Behandlungsmediums 4 die kinetische Energie des Energieeintrags durch Änderungen des Einspritzdruckes in Abhängigkeit von der Leistung geregelt, wobei während des Betriebes der Vorrichtung 1 das flüssige Behandlungsmedium 4 ständig aus der Einspritzeinrichtung 3 mit der an die Leistung der Produktionslinie angepassten Menge und dem angepassten Einspritzdruck austritt. Vorzugsweise wird das flüssige Behandlungsmedium 4 mit einem Druck zwischen 2 bar und 16 bar in die Flaschen 2 eingebracht.

Erfindungsgemäß wird zum Aufschäumen des in eine Flasche 2 eingebrachten Füllgutes, insbesondere Bier pro Flasche 2 jeweils die vorgegebene Menge des flüssigen Behandlungsmediums 4 unter Druck dem in der Flasche 2 aufgenommenen Füllgut bzw. Bier zugeführt, und zwar wird in die Flasche als flüssiges Behandlungsmedium 4 eine wässrige Lösung mit einem Anteil Chlordioxid oder Wasser mit einem Anteil Chlordioxid zugeführt, d.h. als flüssiges Behandlungsmedium 4 findet eine wässrige Lösung bzw. Wasser jeweils mit einem geringen Anteil Chlordioxid Verwendung.

Vorzugsweise weist das flüssige Behandlungsmedium 4 einen Anteil bzw. eine Konzentration an Chlordioxid kleiner als 0,8 ppm, und zwar bezogen auf die vorgegebene Menge des flüssigen Behandlungsmediums 4 auf. Die vorgegebene Menge ist beispielsweise kleiner als 0,05 ml, vorzugsweise kleiner als 0,02 ml, so dass aufgrund der Verwendung von Wasser oder einer wässrigen Lösung in dieser geringen Menge nahezu keine Verdünnung des flüssigen Füllgutes, insbesondere Bier eintritt. Eine derartige geringe Konzentration an Chlordioxid im Wasser bzw. der wässerigen Lösung ist zwar ausreichend um ein Bakterienwachstum effektiv zu verhindern, jedoch die Qualität des Füllgutes nicht merklich zu beeinträchtigen. Im Rahmen einer Verkostung des nach dem erfindungsgemäßen Verfahren abgefüllten Bieres konnte keine geschmackliche Veränderung durch die Probanden festgestellt werden.

Das flüssige Behandlungsmedium 4 wird hierbei mit einer Temperatur kleiner 70 °C, vorzugsweise mit einer Temperatur im Bereich zwischen 60 °C und 70 °C in die Flaschen 2 eingebracht, wobei die Erwärmung des flüssigen Behandlungsmediums 4 beispielweise über eine im Aufnahmebehälter 5 angeordnete, vorzugsweise integrierte Heizvorrichtung 9 erfolgt, welche ihrerseits über die Steuereinrichtung 8 gesteuert wird und hierzu mit dieser verbunden ist.

Beim Aufschäumen von Bier mit einem Ethanol-Gehalt von über 4% wird flüssiges Behandlungsmedium 4 im kalten Zustand, vorzugsweise mit Raumtemperatur in die Behälter eingebracht, d.h. es ist kein zusätzliches Erhitzen des flüssiges Behandlungsmediums 4 erforderlich.

Die Erfindung wurde voranstehend an einem Ausführungsbeispiel beschrieben. Es versteht sich, dass zahlreiche Änderungen sowie Abwandlungen möglich sind. So ist es beispielsweise möglich, mit einem im Transportweg der Flaschen 2 auf die Einspritzeinrichtung 3 folgenden Sensoreinrichtung 10, die mit der Steuereinrichtung 8 verbunden ist, das mit der Einspritzeinrichtung 3 erzeugte Aufschäumen als Ist-Aufschäumung zu erfassen und mit einer zugeordneten Soll-Aufschäumung zu vergleichen, sodass dann auf relevante Parameter des Einspritzprozesses, insbesondere Einspritzdruck, vorgegebene Menge und Temperatur des flüssiges Behandlungsmediums 4 regelnd oder steuernd eingewirkt werden kann.

Die Sensoreinrichtung 10 ist vorzugsweise in Form einer opto-elektrischen Sensoreinrichtung beispielsweise einer Kameraeinheit ausgebildet.

Weiterhin ist es auch möglich, mehrere Einspritzeinrichtungen 3 vorzusehen, und zwar beispielsweise derart, dass jede Flasche 2 für das Aufschäumen mehrere Einspritzeinrichtungen 3 passiert.

### Bezugszeichenliste

- 1: Vorrichtung
- 2: Flasche
- 3: Einspritzeinrichtung
- 4: flüssiges Behandlungsmedium
- 5: Aufnahmebehälter
- 6: Zuführungsleitung
- 7: Portioniereinrichtung
- 8: Steuereinrichtung
- 9: Heizeinrichtung
- 10: Sensoreinrichtung

## Patentansprüche

1. Verfahren zum Aufschäumen eines flüssigen Füllgutes, insbesondere Bier, bei dem das flüssige Füllgut in Behälter (2), vorzugsweise Flaschen eingebracht wird und bei dem pro Behälter (2) jeweils eine vorgegebene Menge eines flüssigen Behandlungsmediums (4) unter Druck dem im Behälter (2) aufgenommenen flüssigen Füllgut zugeführt wird, **dadurch gekennzeichnet, dass** dem Behälter (2) als flüssiges Behandlungsmedium (4) eine wässrige Lösung mit einem Anteil Chlordioxid oder Wasser mit einem Anteil Chlordioxid zugeführt wird.

2. Verfahren nach Anspruch 1, **dadurch gekennzeichnet, dass** ein flüssiges Behandlungsmedium (4) mit einem Anteil an Chlordioxid kleiner als 0,8 ppm dem im Behälter (2) aufgenommenen flüssigen Füllgut zugeführt wird.

3. Verfahren nach Anspruch 1 oder 2, **dadurch gekennzeichnet, dass** pro Behälter (2) als vorgegebene Menge des flüssigen Behandlungsmediums (4) eine Menge kleiner als 0,05 ml, vorzugsweise kleiner als 0,02 ml des flüssigen Behandlungsmediums (4) zugeführt werden.

4. Verfahren nach einem der Ansprüche 1 bis 3, **dadurch gekennzeichnet, dass** das flüssige Behandlungsmedium (4) mit einer Temperatur kleiner 70 °C, vorzugsweise mit einer Temperatur im Bereich zwischen 60 °C und 70 °C in die Behälter (2) eingebracht wird.

5. Verfahren nach einem der Ansprüche 1 bis 4, **dadurch gekennzeichnet, dass** zum Aufschäumen von Bier mit einem Ethanol-Gehalt von über 4% das flüssige Behandlungsmedium (4) im kalten Zustand, vorzugsweise mit Raumtemperatur in die Behälter (2) eingebracht wird.

6. Vorrichtung zur Durchführung des Verfahrens zum Aufschäumen eines in Behälter (2), vorzugsweise Flaschen eingebrachten Füllgutes, insbesondere Bier gemäß einem der vorhergehenden Ansprüche, umfassend wenigstens eine Einspritzvorrichtung (3), eine Steuereinrichtung (8) und einen vorzugsweise heizbaren Aufnahmebehälter (5) mit einem darin aufgenommenen flüssigen Behandlungsmedium (4), wobei gesteuert durch die Steuereinrichtung (8) vom Aufnahmebehälter jeweils eine vorgegebene Menge des flüssigen Behandlungsmediums (4) entnommen und unter Druck dem im Behälter (2) aufgenommenen flüssigen Füllgut zugeführt wird, **dadurch gekennzeichnet, dass** als flüssiges Behandlungsmedium (4) eine wässrige Lösung mit einem Anteil Chlordioxid oder Wasser mit einem Anteil Chlordioxid vorgesehen ist.

7. Vorrichtung nach Anspruch 6, **dadurch gekennzeichnet, dass** der Anteil an Chlordioxid kleiner als 0,8 ppm ist.

8. Vorrichtung nach Anspruch 6 oder 7, **dadurch gekennzeichnet, dass** die vorgegebene Menge des flüssigen Behandlungsmediums (4) kleiner als 0,05 ml, vorzugsweise kleiner als 0,02 ml ist.

9. Vorrichtung nach einem der Ansprüche 6 bis 8, **dadurch gekennzeichnet, dass** das flüssige Behandlungsmedium (4) eine Temperatur kleiner 70 °C, vorzugsweise zwischen 60 °C und 70 °C aufweist.

10. Vorrichtung nach einem der Ansprüche 6 bis 8, **dadurch gekennzeichnet, dass** zum Aufschäumen von Bier mit einem Ethanol-Gehalt von über 4% das flüssige Behandlungsmedium (4) einen kalten Zustand, vorzugsweise Raumtemperatur aufweist.

11. Vorrichtung nach einem der Ansprüche 6 bis 10, **dadurch gekennzeichnet, dass** eine Portioniereinrichtung (7) zur durch die Steuereinrichtung (8) gesteuerten Entnahme der vorgegebene Menge des flüssigen Behandlungsmediums (4) aus dem Aufnahmebehälter (5) vorgesehen ist.

12. Vorrichtung nach einem der Ansprüche 6 bis 11, **dadurch gekennzeichnet, dass** dem Aufnahmebehälter (5) eine Heizeinrichtung (9) zum Erhitzen des darin aufgenommenen das flüssigen Behandlungsmediums (4) zugeordnet ist.

## Claims

1. Method for frothing a liquid product, in particular beer, with which the liquid product is introduced into containers (2), preferably bottles, and in which, for each container (2), a predetermined amount of a liquid treatment medium (4) is respectively fed under pressure to the liquid product received in the container (2), **characterised in that,** as the liquid treatment medium (4), an aqueous solution with a proportion of chlorine dioxide or water with a proportion of chlorine dioxide is fed into the container (2).

2. Method according to claim 1, **characterised in that** a liquid treatment medium (4) with a proportion of chlorine dioxide of less than 0.8 ppm is introduced to the liquid product received in the container (2).

3. Method according to claim 1 or 2, **characterised in that**, per container (2), as the predetermined quantity of the liquid treatment medium (4), a quantity of the liquid treatment medium (4) of less than 0.05 ml, and preferably less than 0.02 ml of the liquid treatment medium is introduced.

4. Method according to any one of claims 1 to 3, **characterised in that** the liquid treatment medium (4) is introduced into the containers (2) at a temperature of less than 70°C, preferably at a temperature in the range between 60°C and 70°C.

5. Method according to any one of claims 1 to 4, **characterised in that**, for the frothing of beer with an ethanol content of more than 4%, the liquid treatment medium (4) is introduced into the containers (2) in a cold state, preferably at room temperature.

6. Device for carrying out the method for the frothing of a filling product introduced into containers (2), preferably bottles, in particular beer, in accordance with any one of the preceding claims, comprising at least one injection device (3), a control device (8), and a preferably heatable receiving container (5), with a liquid treatment medium (4) received therein, wherein, in each case, controlled by the control device (8), a predetermined quantity of the liquid treatment medium (4) is drawn from the receiving container, and under pressure is introduced to the liquid filling product received in the container (2), **characterised in that,** as the liquid treatment medium (4), an aqueous solution with a proportion of chlorine dioxide or water with a proportion of chlorine dioxide is provided.

7. Device according to claim 6, **characterised in that** the proportion of chlorine dioxide is less than 0.8 ppm.

8. Device according to claim 6 or 7, **characterised in that** the predetermined quantity of the liquid treatment medium (4) is less than 0.05 ml, preferably less than 0.02 ml.

9. Device according to any one of claims 6 to 8, **characterised in that** the liquid treatment medium (4) exhibits a temperature of less than 70 °C, and preferably between 60 °C and 70 °C.

10. Device according to any one of claims 6 to 8, **characterised in that**, for the frothing of beer with an ethanol content of more than 4%, the liquid treatment medium (4) is introduced into the containers in a cold state, preferably at room temperature.

11. Device according to any one of claims 6 to 10, **characterised in that** a portioning device (7) is provided for the removal, controlled by the control device (8), of the predetermined quantity of the liquid treatment medium (4) from the receiving container (5).

12. Device according to any one of claims 6 to 11, **characterised in that** a heating device (9) is allocated to the receiving container (5) for the heating of the liquid treatment medium (4) contained therein.

## Revendications

1. Procédé servant à faire mousser un produit de remplissage liquide, en particulier de la bière, dans lequel le produit de remplissage liquide est introduit dans des contenants (2), de préférence des bouteilles, et dans lequel respectivement une quantité prédéfinie d'un milieu de traitement (4) liquide est amené sous pression, par contenant (2), au produit de remplissage liquide reçu dans le contenant (2), **caractérisé en ce qu'**une solution aqueuse avec une proportion de dioxyde de chlore ou de l'eau avec une proportion de dioxyde de chlore est amenée au contenant (2) en tant que milieu de traitement (4) liquide.

2. Procédé selon la revendication 1, **caractérisé en ce qu'**un milieu de traitement (4) liquide avec une proportion en dioxyde de chlore inférieure à 0,8 ppm est amené au produit de remplissage liquide reçu dans le contenant (2).

3. Procédé selon la revendication 1 ou 2, **caractérisé en ce qu'**est amenée, par contenant (2) en tant que quantité prédéfinie du milieu de traitement (4) liquide, une quantité inférieure à 0,05 ml, de préférence inférieure à 0,02 ml du milieu de traitement (4) liquide.

4. Procédé selon l'une quelconque des revendications 1 à 3, **caractérisé en ce que** le milieu de traitement (4) liquide est introduit dans les contenants (2) à une température inférieure à 70 °C, de préférence à une température située dans la plage comprise entre 60 °C et 70 °C.

5. Procédé selon l'une quelconque des revendications 1 à 4, **caractérisé en ce que** le milieu de traitement (4) liquide est introduit dans les contenants (2) dans l'état froid, de préférence à température ambiante, afin de faire mousser de la bière avec une teneur en éthanol supérieure à 4 %.

6. Dispositif servant à mettre en oeuvre le procédé servant à faire mousser un produit de remplissage introduit dans des contenants (2), de préférence des bouteilles, en particulier de la bière, selon l'une quelconque des revendications précédentes, comprenant au moins un dispositif d'injection (3), un système de commande (8) et un contenant de réception (5) de préférence pouvant être chauffé recevant un milieu de traitement (4) liquide, dans lequel respectivement une quantité prédéfinie du milieu de traitement (4) liquide est prélevée du contenant de réception et est amenée sous pression au produit de remplissage liquide reçu dans le contenant (2) de manière commandée par le système de commande (8), **caractérisé en ce qu'**une solution aqueuse avec une proportion de dioxyde de chlore ou de l'eau avec une proportion de dioxyde de chlore est prévue en tant que milieu de traitement (4) liquide.

7. Dispositif selon la revendication 6, **caractérisé en ce que** la proportion en dioxyde de chlore est inférieure à 0,8 ppm.

8. Dispositif selon la revendication 6 ou 7, **caractérisé en ce que** la quantité prédéfinie du milieu de traitement (4) liquide est inférieure à 0,05 ml, de préférence inférieure à 0,02 ml.

9. Dispositif selon l'une quelconque des revendications 6 à 8, **caractérisé en ce que** le milieu de traitement (4) liquide présente une température inférieure à 70 °C, de préférence une température comprise entre 60 °C et 70 °C.

10. Dispositif selon l'une quelconque des revendications 6 à 8, **caractérisé en ce que** le milieu de traitement (4) liquide présente un état froid, de préférence une température ambiante afin de faire mousser de la bière avec une teneur en éthanol supérieure à 4 %.

11. Dispositif selon l'une quelconque des revendications 6 à 10, **caractérisé en ce qu'**est prévu un système de mise en portions (7) servant à prélever de manière commandée par le système de commande (8) la quantité prédéfinie du milieu de traitement (4) liquide hors du contenant de réception (5).

12. Dispositif selon l'une quelconque des revendications 6 à 11, **caractérisé en ce qu'**un système de chauffage (9) servant à chauffer le milieu de traitement (4) reçu dans le contenant de réception (5) est associé à ce dernier.
